# EUROPEAN PATENT SPECIFICATION

(11) **EP 3 054 728 B1**
(45) Date of publication and mention of the grant of the patent: **10.06.2020**
(21) Application number: 13896636.1
(22) Date of filing: 29.10.2013
(51) Int. Cl.: H04W 8/06, H04W 8/22, H04W 36/12

(54) **MOBILITY MANAGEMENT METHOD AND SYSTEM**
MOBILITÄTSVERWALTUNGSVERFAHREN UND SYSTEM
PROCÉDÉ ET SYSTÈME DE GESTION DE MOBILITÉ

(43) Date of publication of application: 10.08.2016
(73) Proprietor: Huawei Technologies Co., Ltd., Longgang District Shenzhen, Guangdong 518129 (CN)
(72) Inventor: LIU, Hai, Shenzhen Guangdong 518129 (CN)
(74) Representative: Gill Jennings & Every LLP
(86) International application number: PCT/CN2013/086104
(87) International publication number: WO 2015/061956

(56) References cited:
- WO-A1-2013/047822
- CN-A- 102 088 757
- CN-A- 103 052 053
- US-A1- 2010 080 186
- US-A1- 2010 291 943
- US-A1- 2012 302 230
- US-A1- 2013 095 834

## Description

### TECHNICAL FIELD

The present invention relates to the field of communications technologies, and in particular, to a mobility management method and system.

### BACKGROUND

An SGSN (Serving GPRS Support Node, serving GPRS support node) and an MME (Mobility Management Entity, mobility management entity) are mobility management nodes on a cellular network. The SGSN is a mobility management node on a GPRS (General Packet Radio Service, general packet radio service) network, and the MME is a mobility management node on an EPC (Evolved Packet Core, evolved packet core) network. An HSS (Home Subscriber Server, home subscriber server) is a subscriber database of the cellular network, and stores subscription data of subscribers. The cellular network may provide differentiated quality of service, and provide different QoS (Quality of Service, quality of service) for different subscribers by setting subscribers of different types.

Currently, the MME provides services for subscribers of all types. When the MME needs to provide different services for subscribers of different types, the MME needs to first determine types of the subscribers, and then perform different operations accordingly.

US 2012/302230 A1 discloses the selection of an MME entity by forwarding an initial UE access message from an eNB detecting that the message includes an entity ID, in which case the corresponding MME entity is selected, otherwise an MME entity is chosen arbitrarily; in the case of a reselection, the reselection request message may also contain an entity ID, resulting in the corresponding MME being selected, otherwise, an MME being selected arbitrarily.

US 2010/080186 A1 teaches a relocation initiated by a first network node (SGSN A) when it finds that it does not support a service required by the UE (e.g. MBMS) by enquiring an HSS to obtain another network node (SGSN B) supporting the required service, the first network node then sending a relocation request to the other network node.

When the MME provides services for a large number of subscribers of different types, operations are relatively complex, and efficiency is relatively low, which is hard to maintenance and management.

### SUMMARY

In view of this, embodiments of the present invention provide a mobility management method and system. The aspects of the present invention providing technical solutions to the above problems of the prior art are set out in the appended claims.

Beneficial effects of the technical solutions provided in the embodiments of the present invention are as follows: An initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a mobility management method according to Embodiment 1;
FIG. 2 is a flowchart of a mobility management method according to Embodiment 2;
FIG. 3 is a schematic diagram of a procedure interaction of a mobility management method according to Embodiment 2;
FIG. 4 is a flowchart of a mobility management method according to Embodiment 3 of the present invention;
FIG. 5 is a schematic diagram of a procedure interaction of a mobility management method according to Embodiment 3 of the present invention;
FIG. 6 is a structural diagram of a mobility management agent device according to Embodiment 4;
FIG. 7 is a structural diagram of a mobility management agent device according to Embodiment 5; and
FIG. 8 is a structural diagram of a mobility management system according to Embodiment 6.

### DESCRIPTION OF EMBODIMENTS

To make the objectives, technical solutions, and advantages of the present invention clearer, the following further describes implementation manners of the present invention in detail with reference to the accompanying drawings.

Embodiments of the present invention relate to a mobility management method and system. A type of UE is acquired, and a mobility management node that can provide a service for the UE of the type is selected to provide a service for the UE. The related mobility management node includes but is not limited to an SGSN on a GPRS network or an MME on an EPC network, or the like, which is not specifically limited in the embodiments. The type of the UE may be set as required, for example, the type of the UE may be set to three types: gold, silver, and bronze; or ten types from type 1 to type 10. Certainly, another manner may also be used, and the embodiments do not impose any specific limitation on a method for setting the type of the UE.

### Embodiment 1

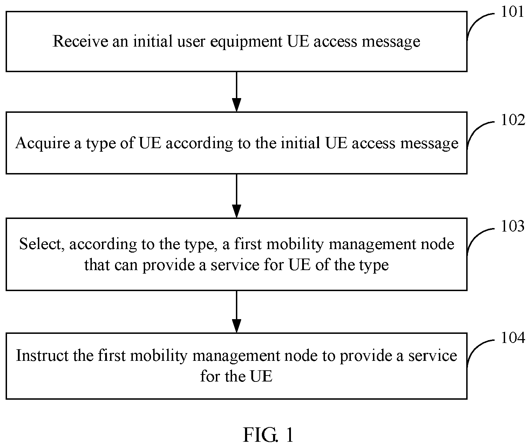

Referring to FIG. 1, this embodiment provides a mobility management method, including the following steps:
101. Receive an initial user equipment UE access message.
102. Acquire a type of UE according to the initial UE access message.
103. Select, according to the type, a first mobility management node that can provide a service for the UE of the type.
104. Instruct the first mobility management node to provide a service for the UE.

The acquiring a type of UE according to the initial UE access message includes:
performing a location update to a home subscriber server HSS according to the initial UE access message;
receiving subscription data of the UE returned by the HSS; and
acquiring the type of the UE from the subscription data of the UE.

The acquiring a type of UE according to the initial UE access message includes:
randomly selecting a second mobility management node for the UE according to the initial UE access message;
forwarding the initial UE access message to the second mobility management node;
receiving a redirection notification that carries the type of the UE and is returned by the second mobility management node; and
acquiring the type of the UE from the redirection notification.

Further, the receiving a redirection notification that carries the type of the UE and is returned by the second mobility management node includes:
receiving a redirection notification that carries subscription data of the UE and is returned by the second mobility management node, where the subscription data includes the type of the UE; or
receiving a redirection notification that carries a type indication and is returned by the second mobility management node, where the type indication includes the type of the UE.

Before the receiving a redirection notification that carries the type of the UE and is returned by the second mobility management node, the method further includes:
performing a location update to the HSS after the second mobility management node receives the initial UE access message;
receiving subscription data of the UE returned by the HSS, where the subscription data includes the type of the UE;
determining, according to the type, that the second mobility management node is not a mobility management node that provides a service for the UE of the type; and
sending the redirection notification that carries the type of the UE.

The instructing the first mobility management node to provide a service for the UE includes:
forwarding the initial UE access message to the first mobility management node, so that the first mobility management node performs a location update to the HSS.

The foregoing method provided in this embodiment may be applied to a mobility management agent device, where the device has a function of a mobility management node, further maintains a correspondence between a mobility management node and a type of UE, and may search, by using the correspondence, for a mobility management node corresponding to any type, so as to perform selection.

According to the foregoing method provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### Embodiment 2

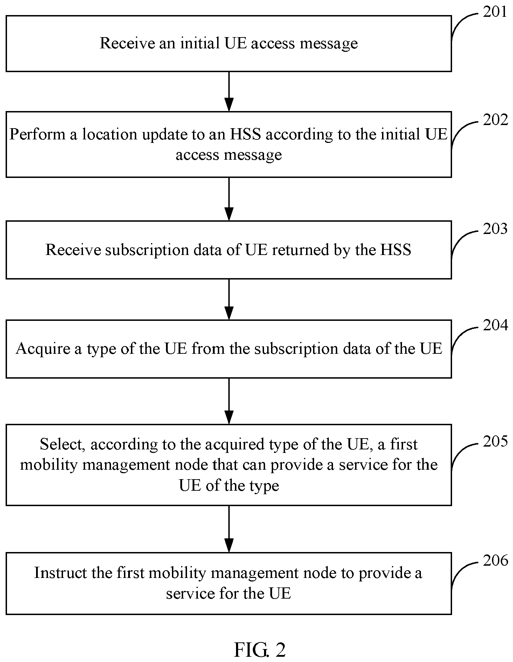

Referring to FIG. 2, this embodiment provides a mobility management method, including the following steps:
201. Receive an initial UE access message.

In this embodiment, there may be multiple scenarios in which the initial UE access message is received, and the scenarios include but are not limited to UE initial access, a location update, a service request, and the like, and this embodiment do not impose any specific limitation thereto.

202. Perform a location update to an HSS according to the initial UE access message.

203. Receive subscription data of UE returned by the HSS, where the subscription data includes a type of the UE.

204. Acquire the type of the UE from the subscription data of the UE.

The type of the UE is preset, for example, the type of the UE is a gold subscriber or a silver subscriber. Specifically, a parameter may be added to a QoS parameter, where the parameter is used to represent a type of UE, which is not specifically limited in this embodiment.

205. Select, according to the acquired type of the UE, a first mobility management node that can provide a service for the UE of the type.

The first mobility management node may be an SGSN, or may be an MME, which is not specifically limited in this embodiment.

Specifically, a correspondence between a mobility management node and a type of UE may be locally maintained. When a mobility management node is being selected, the correspondence may be locally queried according to the type of the UE to obtain a mobility management node corresponding to the type.

206. Instruct the first mobility management node to provide a service for the UE.

In this embodiment, the instructing the first mobility management node to provide a service for the UE may include:
forwarding the initial UE access message to the first mobility management node, so that the first mobility management node performs a location update to the HSS.

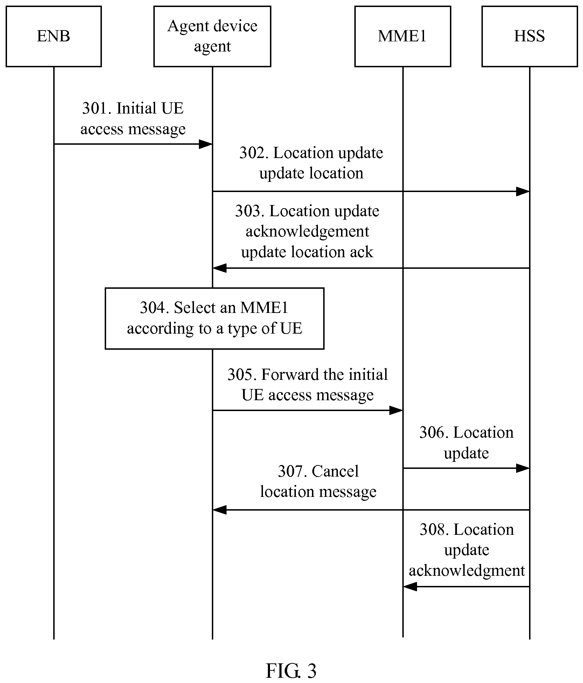

Referring to FIG. 3, the following uses an EPC network as an example to describe in detail how to select a mobility management node MME. A mobility management procedure is as follows:
301. An eNB sends an initial UE access message to an agent device agent of an MME.

302. The agent device agent performs a location update to an HSS after receiving the initial UE access message.

303. The HSS responds to the agent device agent with a location update acknowledgement, where the location update acknowledgement includes subscription data of UE, and the subscription data includes a type of the UE.

304. The agent device agent selects an MME1 according to the type of the UE, where the MME1 can provide a service for the UE of the type.

305. The agent device agent forwards the foregoing initial UE access message to the MME1.

306. The MME1 sends a location update message to the HSS after receiving the initial UE access message.

307. The HSS sends a cancel location message to the agent device after receiving the location update message sent by the MME1.

308. The HSS responds to the MME1 with a location update acknowledgement.

A sequence between the foregoing steps 307 and 308 is not fixed. The two steps may be executed successively, or may be executed at the same time, which is not limited herein. After the location update is completed, the MME1 may directly communicate with the eNB, or communicate with the eNB by using the agent device.

According to the foregoing method provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### Embodiment 3

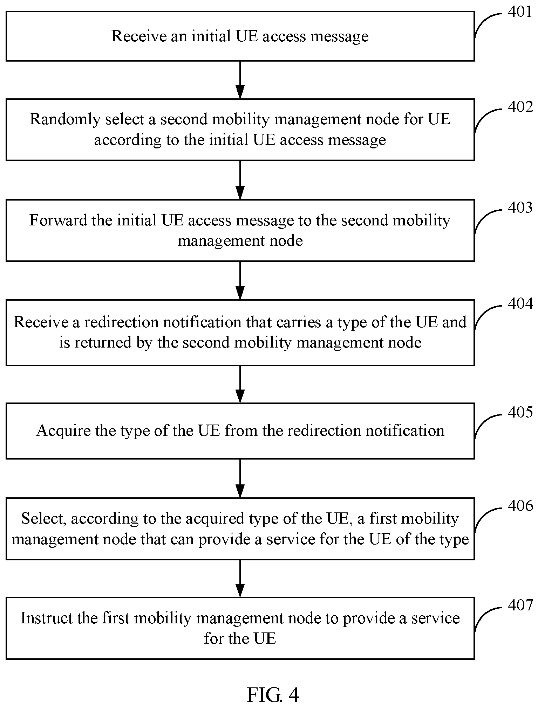

Referring to FIG. 4, this embodiment provides a mobility management method, including the following steps:
401. Receive an initial UE access message.

In this embodiment, there may be multiple scenarios in which the initial UE access message is received, and the scenarios include but are not limited to UE initial access, a location update, a service request, and the like, and this embodiment do not impose any specific limitation thereto.

402. Randomly select a second mobility management node for UE according to the initial UE access message.

The second mobility management node may be an SGSN, or may be an MME, which is not specifically limited in this embodiment.

In this step, because the mobility management node is randomly selected, that is, the mobility management node may be any mobility management node. Therefore, the mobility management node may support a type of the UE, or may not support a type of the UE.

403. Forward the initial UE access message to the second mobility management node.

404. Receive a redirection notification that carries a type of the UE and is returned by the second mobility management node.

This step may specifically include:
receiving a redirection notification that carries subscription data of the UE and is returned by the second mobility management node, where the subscription data includes the type of the UE; or
receiving a redirection notification that carries a type indication and is returned by the second mobility management node, where the type indication includes the type of the UE.

The type of the UE is preset, for example, the type of the UE is a gold subscriber or a silver subscriber. Specifically, a parameter may be added to a QoS parameter, where the parameter is used to represent a type of UE, which is not specifically limited in this embodiment.

The foregoing type indication is a piece of indication information that includes a type of UE, and may be an identifier or a flag bit, and different types are represented by setting different values, for example, a value 1 represents gold UE, a value 2 represents silver UE, and a value 3 represents bronze UE.

In this embodiment, before the receiving a redirection notification that carries a type of the UE and is returned by the second mobility management node, the method may further include:
performing a location update to the HSS after the second mobility management node receives the initial UE access message; receiving subscription data of the UE returned by the HSS, where the subscription data includes the type of the UE; determining, according to the type, that the second mobility management node is not a mobility management node that provides a service for the UE of the type; and sending the redirection notification that carries the type of the UE.

Specifically, after obtaining the subscription data of the UE, the second mobility management node may directly add the subscription data to the redirection notification, to send the subscription data, or may set the type indication according to the type of the UE in the subscription data, and add the type indication to the redirection notification, to send the type indication, which is not specifically limited in this embodiment.

405. Acquire the type of the UE from the received redirection notification.

In this embodiment, that the redirection notification is received indicates that the selected second mobility management node does not support the type of the UE, and therefore, a mobility management node that can support the type needs to be reselected according to the type of the UE.

406. Select, according to the acquired type of the UE, a first mobility management node that can provide a service for the UE of the type.

Specifically, a correspondence between a mobility management node and a type of UE may be locally maintained. When a mobility management node is being selected, the correspondence may be locally queried according to the type of the UE to obtain a mobility management node corresponding to the type.

407. Instruct the first mobility management node to provide a service for the UE.

In this embodiment, the instructing the first mobility management node to provide a service for the UE may include:
forwarding the initial UE access message to the first mobility management node, so that the first mobility management node performs a location update to the HSS.

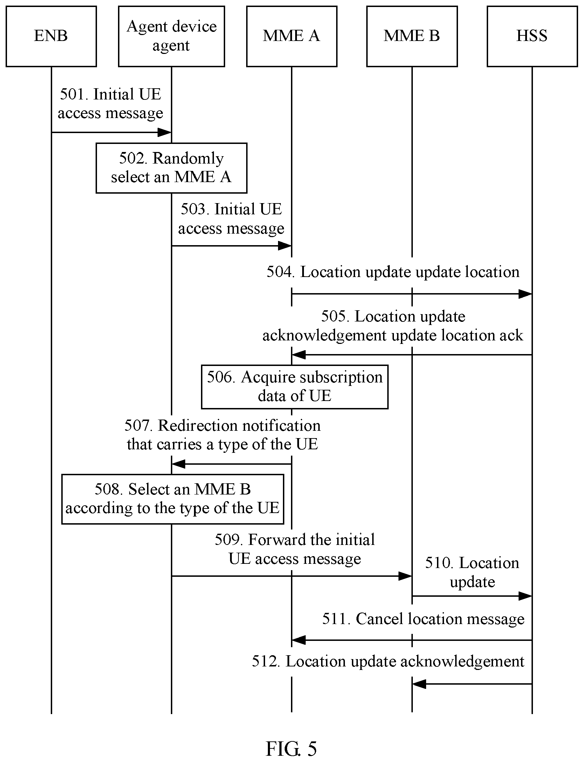

Referring to FIG. 5, the following uses an EPC network as an example to describe in detail how to select a mobility management node MME. A mobility management procedure is as follows:
501. An eNB sends an initial UE access message to an agent device.

502. The agent device agent randomly selects a mobility management node MME A for UE after receiving the initial UE access message.

503. The agent device agent forwards the initial UE access message to the MME A.

504. The MME A performs a location update to an HSS after receiving the initial UE access message.

505. The HSS responds to the MME A with a location update acknowledgement, where the location update acknowledgement includes subscription data of the UE, and the subscription data includes a type of the UE.

506. The MME A determines whether the MME A provides a service for the UE of the type after acquiring the type of the UE from the subscription data.

507. If it is determined that the MME A does not provide a service for the UE of the type, the MME A sends, to the agent device, a redirection notification that carries the type of the UE, and notifies the agent device that another MME needs to be selected.

The redirection notification may carry the subscription data of the UE, or carry a type indication, or the like, where the type indication is a piece of indication information that is set by the MME A according to the type of UE, and may be an identifier or a flag bit, and different types are represented by setting different values, for example, a value 1 represents gold UE, a value 2 represents silver UE, and a value 3 represents bronze UE.

508. The agent device agent receives the redirection notification, acquires the type of UE from the redirection notification, and selects a correct MME B according to the type, where the MME B can provide a service for the UE of the type.

509. The agent device agent forwards the foregoing initial UE access message to the MME B.

510. The MME B sends a location update message to the HSS after receiving the initial UE access message.

511. The HSS responds to the MME B with a location update acknowledgement after receiving the location update message from the MME B.

512. The HSS sends a cancel location message to the MME A.

A sequence between the foregoing steps 511 and 512 is not fixed. The two steps may be executed successively, or may be executed at the same time, which is not limited herein. After the location update is completed, the MME B may directly communicate with the eNB, or communicate with the eNB by using the agent device.

According to the foregoing method provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### Embodiment 4

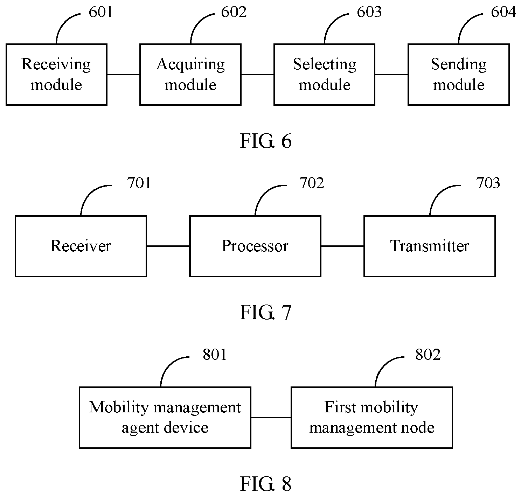

Referring to FIG. 6, this embodiment provides a mobility management agent device, including:
a receiving module 601, configured to receive an initial user equipment UE access message;
an acquiring module 602, configured to acquire a type of UE according to the initial UE access message;
a selecting module 603, configured to select, according to the type, a first mobility management node that can provide a service for the UE of the type; and
a sending module 604, configured to instruct the first mobility management node to provide a service for the UE.

In this embodiment, in a scenario, the acquiring module 602 may include:
a location updating unit, configured to perform a location update to a home subscriber server HSS according to the initial UE access message, and receive subscription data of the UE returned by the HSS; and
a first acquiring unit, configured to acquire the type of the UE from the subscription data of the UE.

In this embodiment, in another scenario, the acquiring module 602 may include:
a selecting unit, configured to randomly select a second mobility management node for the UE according to the initial UE access message;
a forwarding unit, configured to forward the initial UE access message to the second mobility management node;
a receiving unit, configured to receive a redirection notification that carries the type of the UE and is returned by the second mobility management node; and
a second acquiring unit, configured to acquire the type of the UE from the redirection notification.

Further, the foregoing receiving unit may be configured to:
receive a redirection notification that carries subscription data of the UE and is returned by the second mobility management node, where the subscription data includes the type of the UE; or
receive a redirection notification that carries a type indication and is returned by the second mobility management node, where the type indication includes the type of the UE.

In this embodiment, the sending module 604 may be configured to:
forward the initial UE access message to the first mobility management node, so that the first mobility management node performs a location update to the HSS.

The foregoing device provided in this embodiment may execute the method provided in any one of the foregoing method embodiments. For details about a specific process, refer to the description in the method embodiments, and details are not described herein again.

According to the foregoing device provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### Embodiment 5

Referring to FIG. 7, this embodiment provides a mobility management agent device, including:
a receiver 701, configured to receive an initial user equipment UE access message;
a processor 702, configured to acquire a type of UE according to the initial UE access message, and select, according to the type, a first mobility management node that can provide a service for the UE of the type; and
a transmitter 703, configured to instruct the first mobility management node to provide a service for the UE.

In this embodiment, the transmitter 703 is further configured to perform a location update to a home subscriber server HSS according to the initial UE access message;
the receiver 701 is further configured to receive subscription data of the UE returned by the HSS; and
the processor 702 is configured to acquire the type of the UE from the subscription data of the UE.

In this embodiment, the processor 702 is configured to randomly select a second mobility management node for the UE according to the initial UE access message;
the transmitter 703 is further configured to forward the initial UE access message to the second mobility management node;
the receiver 701 is further configured to receive a redirection notification that carries the type of the UE and is returned by the second mobility management node; and
the processor 702 is further configured to acquire the type of the UE from the redirection notification.

Further, the receiver 701 is configured to:
receive a redirection notification that carries subscription data of the UE and is returned by the second mobility management node, where the subscription data includes the type of the UE; or
receive a redirection notification that carries a type indication and is returned by the second mobility management node, where the type indication includes the type of the UE.

In this embodiment, the transmitter 703 is configured to:
forward the initial UE access message to the first mobility management node, so that the first mobility management node performs a location update to the HSS.

The foregoing device provided in this embodiment may execute the method provided in any one of the foregoing method embodiments. For details about a specific process, refer to the description in the method embodiments, and details are not described herein again.

According to the foregoing device provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

### Embodiment 6

Referring to FIG. 8, this embodiment provides a mobility management system, including the mobility management agent device 801 and the first mobility management node 802 described in Embodiment 4 or 5.

The first mobility management node 802 is configured to provide a service for the user equipment UE according to a notification of the mobility management agent device 801.

Further, the foregoing system may further include:
a second mobility management node, configured to receive the initial UE access message forwarded by the mobility management agent device 801, perform a location update to a home subscriber server HSS, and receive subscription data of the UE returned by the HSS, where the subscription data includes a type of the UE; and determine, according to the type, that the second mobility management node is not a mobility management node that provides a service for the UE of the type, and send, to the mobility management agent device, a redirection notification that carries the type of the UE.

The mobility management agent device 801 in this embodiment has a same function as the mobility management agent device provided in the foregoing Embodiment 4 or 5, and details are not described herein again.

The foregoing system provided in this embodiment may execute the method provided in any one of the foregoing method embodiments. For details about a specific process, refer to the description in the method embodiments, and details are not described herein again.

According to the foregoing system provided in this embodiment, an initial UE access message is received, a type of UE is acquired according to the initial UE access message, a first mobility management node that can provide a service for the UE of the type is selected according to the type, and the first mobility management node is instructed to provide a service for the UE. Because a mobility management node provides a service by differentiating a type of user equipment, a mobility management node that can support the type of the UE is selected to provide a service for the UE, which not only simplifies an operation procedure of the mobility management node and improves service efficiency, but also helps the mobility management node better manage and maintain the UE.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

## Claims

1. A mobility management method, wherein the method comprises:
receiving (101, 201, 401), by an agent device, an initial user equipment, UE, access message;
acquiring (102), by the agent device, a type of UE;
selecting (103, 205, 406), by the agent device, according to the type, a first mobility management node that can provide a service for UE of the type; and
instructing (104, 206, 407), by the agent device, the first mobility management node to provide a service for the UE;
**characterized in that** the acquiring (102), by the agent device, a type of UE comprises:
randomly selecting (402), by the agent device, a second mobility management node for the UE;
forwarding (403), by the agent device, the initial UE access message to the second mobility management node;
performing (202), by the second mobility management node, a location update to a home subscriber server, HSS, according to the initial UE access message;
receiving (203), by the second mobility management node, a location update acknowledgement including, subscription data of the UE returned by the HSS;
acquiring (204), by the second mobility management node, the type of the UE from the subscription data of the UE;
determining, according to the type of the UE, that the second mobility management node is not a mobility management node that provides a service for the UE of the type.
receiving (404), by the agent device, a redirection notification that carries the type of the UE and is returned by the second mobility management node; and
acquiring (405), by the agent device, the type of the UE from the redirection notification.

2. The method according to claim 1, wherein the receiving (404), by the agent device, a redirection notification that carries the type of the UE and is returned by the second mobility management node comprises:
receiving, by the agent device, a redirection notification that carries subscription data of the UE and is returned by the second mobility management node, wherein the subscription data comprises the type of the UE; or
receiving, by the agent device, a redirection notification that carries a type indication and is returned by the second mobility management node, wherein the type indication comprises the type of the UE.

3. The method according to claim 1, wherein the instructing (104, 206, 407), by the agent device, the first mobility management node to provide a service for the UE comprises:
forwarding, by the agent device, the initial UE access message to the first mobility management node, so that the first mobility management node performs a location update to a home subscriber server, HSS.

4. A mobility management system, wherein the system comprises a mobility management agent device (801), a first mobility management node (802) and a second mobility management node; wherein the mobility management agent device comprises:
a receiving module (601), configured to receive an initial user equipment, UE, access message;
an acquiring module (602), configured to acquire a type of UE;
a selecting module (603), configured to select, according to the type, a first mobility management node that can provide a service for the UE of the type; and
a sending module (604), configured to instruct the first mobility management node to provide a service for the UE;
**characterized in that** the acquiring module (602) comprises:
a selecting unit, configured to randomly select a second mobility management node for the UE according to the initial UE access message;
a forwarding unit, configured to forward the initial UE access message to the second mobility management node;
a receiving unit, configured to receive a redirection notification that carries the type of the UE and is returned by the second mobility management node; and
a second acquiring unit, configured to acquire the type of the UE from the redirection notification; wherein the first mobility management node is configured to:
provide a service for the user equipment, UE, according to a notification of the mobility management agent device; wherein the second mobility management node is configured to:
perform (202), a location update to a home subscriber server, HSS, according to the initial UE access message;
receive (203), a location update acknowledgement including, subscription data of the UE returned by the HSS;
acquire (204) the type of the UE from the subscription data of the UE; and
determine, according to the type of the UE, that the second mobility management node is not a mobility management node that provides a service for the UE of the type;

5. The system of claim 4 wherein the receiving unit of the mobility management agent device is configured to receive a redirection notification that carries subscription data of the UE and is returned by the second mobility management node, wherein the subscription data comprises the type of the UE; or
receive a redirection notification that carries a type indication and is returned by the second mobility management node, wherein the type indication comprises the type of the UE.

6. The system of claim 4 wherein the sending module (604) of the mobility management device is configured to forward the initial UE access message to the first mobility management node, so that the first mobility management node performs a location update to the HSS.

## Patentansprüche

1. Mobilitätsverwaltungsverfahren, das Verfahren Folgendes umfassend:
Empfangen (101, 201, 401), durch ein Agentengerät, einer anfänglichen Benutzergerät(UE-)Zugriffsnachricht;
Erfassen (102), durch das Agentengerät, eines Typs von UE;
Auswählen (103, 205, 406), durch das Agentengerät gemäß dem Typ, eines ersten Mobilitätsverwaltungsknotens, der einen Dienst für ein UE des Typs bereitstellen kann; und
Anweisen (104, 206, 407), durch das Agentengerät, des ersten Mobilitätsverwaltungsknotens, einen Dienst für das UE bereitzustellen;
**dadurch gekennzeichnet, dass** das Erfassen (102), durch das Agentengerät,
eines Typs von UE Folgendes umfasst:
zufälliges Auswählen (402), durch das Agentengerät, eines zweiten Mobilitätsverwaltungsknotens für das UE;
Weiterleiten (403), durch das Agentengerät, der anfängliche UE-Zugriffsnachricht an den zweiten Mobilitätsverwaltungsknoten;
Durchführen (202), durch den zweiten Mobilitätsverwaltungsknoten, einer Standortaktualisierung an einem Heimteilnehmerserver (HSS) gemäß der anfänglichen UE-Zugriffsnachricht;
Empfangen (203), durch den zweiten Mobilitätsverwaltungsknoten, einer Standortaktualisierungs-Bestätigung, die Abonnementdaten des von dem HSS zurückgegebenen UE enthält;
Erfassen (204), durch den zweiten Mobilitätsverwaltungsknoten, des Typs des UE aus den Abonnementdaten des UE;
Bestimmen, gemäß dem Typ des UE, dass der zweite Mobilitätsverwaltungsknoten kein Mobilitätsverwaltungsknoten ist, der einen Dienst für das UE des Typs bereitstellt;
Empfangen (404), durch das Agentengerät, einer Umleitungsbenachrichtigung,
die den Typ des UE trägt und durch den zweiten Mobilitätsverwaltungsknoten zurückgegeben wird; und
Erfassen (405), durch das Agentengerät, des Typs des UE aus der Umleitungsbenachrichtigung.

2. Verfahren nach Anspruch 1, wobei das Empfangen (404), durch das Agentengerät, einer Umleitungsbenachrichtigung, die den Typ von des UE trägt und durch den zweiten Mobilitätsverwaltungsknoten zurückgegeben wird, Folgendes umfasst:
Empfangen, durch das Agentengerät, einer Umleitungsbenachrichtigung, die die Abonnementdaten des UE trägt und durch den zweiten Mobilitätsverwaltungsknoten zurückgegeben wird, wobei die Abonnementdaten den Typ des UE umfassen; oder
Empfangen, durch das Agentengerät, einer Umleitungsbenachrichtigung, die eine Typanzeige trägt und durch den zweiten Mobilitätsverwaltungsknoten zurückgegeben wird, wobei die Typanzeige den Typ des UE umfassen.

3. Verfahren nach Anspruch 1, wobei das Anweisen (104, 206, 407), durch das Agentengerät, des ersten Mobilitätsverwaltungsknotens, einen Dienst für das UE bereitzustellen, Folgendes umfasst:
Weiterleiten, durch das Agentengerät, der anfängliche UE-Zugriffsnachricht an den zweiten Mobilitätsverwaltungsknoten, sodass der erste Mobilitätsverwaltungsknoten eine Standortaktualisierung an einem Heimteilnehmerserver (HSS) durchführt.

4. Mobilitätsverwaltungssystem, wobei das System ein Mobilitätsverwaltungs-Agentengerät (801), einen ersten Mobilitätsverwaltungsknoten (802) und einen zweiten Mobilitätsverwaltungsknoten umfasst;
wobei das Mobilitätsverwaltungs-Agentengerät Folgendes umfasst:
ein Empfangsmodul (601), konfiguriert für das Empfangen einer anfänglichen Benutzergerät(UE-)Zugriffsnachricht;
ein Erfassungsmodul (602), dafür konfiguriert, einen Typ von UE zu erfassen;
ein Auswahlmodul (603), konfiguriert zum Auswählen, gemäß dem Typ, eines ersten Mobilitätsverwaltungsknotens, der einen Dienst für das UE des Typs bereitstellen kann; und
ein Sendemodul (604), konfiguriert zum Anweisen des ersten Mobilitätsverwaltungsknotens, einen Dienst für das UE bereitzustellen;
**dadurch gekennzeichnet, dass** das Erfassungsmodul (602) Folgendes umfasst:
eine Auswahleinheit, dafür konfiguriert, zufällig einen zweiten Mobilitätsverwaltungsknoten für das UE gemäß der anfänglichen UE-Zugriffsnachricht auszuwählen;
eine Weiterleitungseinheit, dafür konfiguriert, die anfängliche UE-Zugriffsnachricht an den zweiten Mobilitätsverwaltungsknoten weiterzuleiten; eine Empfangseinheit, dafür konfiguriert, eine Umleitungsbenachrichtigung zu empfangen, die den Typ des UE trägt und vom zweiten Mobilitätsverwaltungsknoten zurückgegeben wird; und
eine zweite Erfassungseinheit, konfiguriert für das Erfassen des Typs des UE aus der Umleitungsbenachrichtigung;
wobei der erste Mobilitätsverwaltungsknoten für Folgendes konfiguriert ist:
Bereitstellen eines Dienstes für das Benutzergerät (UE) gemäß einer Benachrichtigung des Mobilitätsverwaltungs-Agentengeräts;
wobei der zweite Mobilitätsverwaltungsknoten für Folgendes konfiguriert ist:
Durchführen (202) einer Standortaktualisierung an einem Heimteilnehmerserver (HSS) gemäß der anfänglichen UE-Zugriffsnachricht;
Empfangen (203) einer Standortaktualisierungs-Bestätigung, die Abonnementdaten des von dem HSS zurückgegebenen UE enthält; Erfassen (204) des Typs des UE aus den Abonnementdaten des UE; und Bestimmen, gemäß dem Typ des UE, dass der zweite Mobilitätsverwaltungsknoten kein Mobilitätsverwaltungsknoten ist, der einen Dienst für das UE des Typs bereitstellt;

5. System nach Anspruch 4, wobei die Empfangseinheit des Mobilitätsverwaltungs-Agentengeräts konfiguriert ist zum Empfangen einer Umleitungsbenachrichtigung, die die Abonnementdaten des UE trägt und durch den zweiten Mobilitätsverwaltungsknoten zurückgegeben wird, wobei die Abonnementdaten den Typ des UE umfassen; oder
Empfangen einer Umleitungsbenachrichtigung, die eine Typanzeige trägt und durch den zweiten Mobilitätsverwaltungsknoten zurückgegeben wird, wobei die Typanzeige den Typ des UE umfassen.

6. System nach Anspruch 4, wobei das Sendemodul (604) des Mobilitätsverwaltungsgeräts dafür konfiguriert ist, die anfängliche UE-Zugriffsnachricht an den zweiten Mobilitätsverwaltungsknoten weiterzuleiten, sodass der erste Mobilitätsverwaltungsknoten eine Standortaktualisierung am HSS durchführt.

## Revendications

1. Procédé de gestion de mobilité, dans lequel le procédé comprend :
la réception (101, 201, 401), par un dispositif d'agent, d'un message d'accès d'un équipement utilisateur initial, UE ;
l'acquisition(102), par le dispositif d'agent, d'un type d'UE ;
la sélection (103, 205, 406), par le dispositif d'agent, selon le type, d'un premier nœud de gestion de mobilité qui peut fournir un service pour l'UE du type ; et
le fait d'ordonner (104, 206, 407), par le dispositif d'agent, au premier nœud de gestion de mobilité de fournir un service pour l'UE ;
**caractérisé en ce que** l'acquisition (102), par le dispositif d'agent, d'un type d'UE comprend :
la sélectionn de façon aléatoire (402), par le dispositif d'agent, d'un second nœud de gestion de mobilité pour l'UE ;
le transfert (403), par le dispositif d'agent, du message d'accès d'UE initial au second nœud de gestion de mobilité ;
la mise en œuvre (202), par le second nœud de gestion de mobilité, d'une mise à jour d'emplacement sur un serveur d'abonné domestique, HSS, selon le message d'accès d'UE initial ;
la réception (203), par le second nœud de gestion de mobilité, d'un accusé de réception de mise à jour d'emplacement comprenant, des données d'abonnement de l'UE retournées par le HSS ;
l'acquisition (204), par le second nœud de gestion de mobilité, du type de l'UE à partir des données d'abonnement de l'UE ;
la détermination, selon le type de l'UE, que le second nœud de gestion de mobilité n'est pas un nœud de gestion de mobilité qui fournit un service pour l'UE du type.
la réception (404), par le dispositif d'agent, d'une notification de redirection qui porte le type de l'UE et qui est retournée par le second nœud de gestion de mobilité ; et
l'acquisition (405), par le dispositif d'agent, du type de l'UE à partir de la notification de redirection.

2. Procédé selon la revendication 1, dans lequel la réception (404), par le dispositif d'agent, d'une notification de redirection qui porte le type de l'UE et qui est retournée par le second nœud de gestion de mobilité comprend :
la réception, par le dispositif d'agent, d'une notification de redirection qui porte des données d'abonnement de l'UE et est retournée par le second nœud de gestion de mobilité, les données d'abonnement comprenant le type de l'UE ; ou
la réception, par le dispositif d'agent, une notification de redirection qui porte une indication de type et est retournée par le second nœud de gestion de mobilité,
l'indication de type comprenant le type de l'UE.

3. Procédé selon la revendication 1, dans lequel l'ordre (104, 206, 407), par le dispositif d'agent, au premier nœud de gestion de mobilité de fournir un service pour l'UE comprend :
le transfert par le dispositif d'agent, du message d'accès d'UE initial au premier nœud de gestion de mobilité, de telle sorte que le premier nœud de gestion de mobilité met en œuvre une mise à jour d'emplacement sur un serveur d'abonné domestique HSS.

4. Système de gestion de mobilité, dans lequel le système comprend un dispositif d'agent de gestion de mobilité (801), un premier nœud de gestion de mobilité (802) et un second nœud de gestion de mobilité ;
dans lequel le dispositif d'agent de gestion de mobilité comprend :
un module de réception (601), configuré pour recevoir un message d'accès d'un équipement utilisateur initial, UE ;
un module d'acquisition (602), configuré pour acquérir un type d'UE ;
un module de sélection (603), configuré pour sélectionner, selon le type, un premier nœud de gestion de mobilité qui peut fournir un service pour l'UE du type ; et
un module d'envoi (604), configuré pour ordonner au premier nœud de gestion de mobilité de fournir un service pour l'UE ;
**caractérisé en ce que** le module d'acquisition (602) comprend :
une unité de sélection, configurée pour sélectionner de façon aléatoire un second nœud de gestion de mobilité pour l'UE selon le message d'accès d'UE initial ;
une unité de transfert, configurée pour transférer le message d'accès d'UE initial au second nœud de gestion de mobilité ;
une unité de réception, configurée pour recevoir une notification de redirection qui porte le type de l'UE et est retournée par le second nœud de gestion de mobilité ; et une seconde unité d'acquisition, configurée pour acquérir le type de l'UE à partir de la notification de redirection ;
dans lequel le premier nœud de gestion de mobilité est configuré pour :
fournir un service pour l'équipement utilisateur, UE, selon une notification du dispositif d'agent de gestion de mobilité ;
dans lequel le second nœud de gestion de mobilité est configuré pour :
mettre en œuvre (202), une mise à jour d'emplacement sur un serveur d'abonné domestique, HSS, selon le message d'accès d'UE initial ;
recevoir (203), un accusé de réception de mise à jour d'emplacement comprenant, des données d'abonnement de l'UE retournées par le HSS ;
acquérir (204) le type de l'UE à partir des données d'abonnement de l'UE ; et déterminer, selon le type de l'UE, que le second nœud de gestion de mobilité n'est pas un nœud de gestion de mobilité qui fournit un service pour l'UE du type ;

5. Système selon la revendication 4, dans lequel l'unité de réception du dispositif d'agent de gestion de mobilité est configurée pour recevoir une notification de redirection qui porte des données d'abonnement de l'UE et est retournée par le second nœud de gestion de mobilité, dans lequel les données d'abonnement comprennent le type de l'UE ; ou
recevoir une notification de redirection qui porte une indication de type et est retournée par le second nœud de gestion de mobilité, dans lequel l'indication de type comprend le type de l'UE.

6. Système selon la revendication 4, dans lequel le module d'envoi (604) du dispositif de gestion de mobilité est configuré pour transférer le message d'accès d'UE initial au premier nœud de gestion de mobilité, de telle sorte que le premier nœud de gestion de mobilité met en œuvre une mise à jour d'emplacement sur le HSS.
